# EUROPEAN PATENT APPLICATION

(11) **EP 0 566 105 A2**
(43) Date of publication of application: **20.10.1993**
(21) Application number: 93106096.6
(22) Date of filing: 15.04.1993
(51) Int. Cl.: G06F 9/44

(54) **Knowledge acquisition system and method**

(30) Priority: 16.04.1992 US 869401
(71) Applicant: Hughes Aircraft Company, Los Angeles, California 90045-0066 (US)
(72) Inventor: Dolan, Charles, Culver City, CA 90230 (US); Cuda, Thomas V., North Hollywood, CA 91606 (US); Ebeid, Nader, Westlake Village, CA 91362 (US); Goldman, Seth, R., Los Angeles, CA 90035 (US)
(74) Representative: Witte, Alexander, Dr.-Ing.

(57) **Abstract**

A knowledge acquisition system (10) and method for a knowledge-based system are disclosed. The system (10) includes a knowledge structuring unit (12) which breaks a problem up into individual modules. A module represents an input/output relationship associated with the application with a knowledge source for a particular task. Knowledge structuring also provides knowledge sources for each module. A knowledge aggregation unit (14) acquires test cases and knowledge components in an interleaved fashion by performing knowledge-based verification (20) to permit the module to solve test cases and to permit a knowledge engineer or expert to make appropriate corrections to the module. Individual modules are then interconnected by the module interconnection unit (22) and again the entire system is verified by knowledge-based verification unit (24). The system (10) permits the rapid acquisition of relatively large knowledge bases derived partially from data or from an expert and also permits a knowledge-based system to use different inference engines (Fig. 1).

## Description

### BACKROUND OF THE INVENTION

### 1. Technical Field

This invention relates to knowledge-based systems, and more particularly to an improved knowledge acquisition system and method for use in knowledge-based systems.

### 2. Discussion

Knowledge-based systems, such as expert systems, are useful in a number of tasks which do not have tractable algorithmic solutions. These tasks include, for example, planning, legal reasoning, medical diagnosis, geological exploration, and military situation analysis. A major component of knowledge-based system development is the process of knowledge acquisition. The knowledge to be acquired by the system may comprise knowledge gained from human experts or from historical data. While each of these sources of knowledge has its respective advantages and disadvantages, in general, prior krLowle dge-based systems have made use of one or the other, but not both, of these sources.

Knowledge from either of these sources may be acquired in knowledge-based systems in two basic ways. The first is manual non-tool aided acquisition. The primary disadvantage with this approach is that it is very slow. A description of a general purpose non-tool aided knowledge acquisition method is found in Buchanan, B. G., Barstow, D., Bechtel, R., Bennet, J., Clancey, W., Kulikowski, C., Mitchell, T., & Waerman, D. A. (1983), "Constructing an Expert System", in F. Hayes-Roth, D. A. Waterman, & D. B. Lenat (Eds.), Building Expert Systems Addison Wesly, p. 321-326.

To speed up the knowledge acquisition process, a second approach has been developed using automated knowledge acquisition tools. These systems may employ an interactive loop and feedback to an expert to assist in the extraction of symbolic knowledge from the expert's knowledge. Adescription of an automated knowledge acquisition system is found in Boose, J. H., & Bradshaw, J. M. (1988), "Expertise Transfer and Complex Problems: Using AQUINAS as a Knowledge-acquisition Workbench for Knowledge-based Systems", in J. Boose & B. Gaines (Eds.), Knowledge Acquisition Tools for Expert Systems, Academic Press, p. 39-64. One problem with these automated systems is that they generally cannot support the acquisition of large knowledge bases. This is because large knowledge bases become very difficult to manage as their size rises above approximately 100 rules. Also, current automated knowledge acquisition tools are generally limited to acquiring knowledge about classification problems and are not suitable for other problems such as design and portfolio construction. Further, even with automated knowledge acquisition tools, the acquisition process is still relatively slow and results in an acquisition of only approximately one rule per day.

A critical part of the knowledge acquisition process is the step of knowledge verification: once the knowledge-based system is constructed it must be tested to check the correctness of the answers it provides. A typical way of performing this testing is example-based testing involving test cases.

One problem with the conventional verification processes is that it is difficult to pinpoint problems. It is relatively easy to determine that the system is behaving incorrectly, but it is often hard to pinpoint exactly where the problem lies within an entire system, which may contain hundreds of rules.

Another approach to knowledge-based verification is the use of formal knowledge-based verification schemes. These formal schemes are not ideal because it is often difficult to develop the formal proof procedures necessary. Also, it is frequently computationally intractable to implement these procedures for most knowledge representations in use. Another disadvantage is that formal knowledge-based verification procedures generally can't be used for other than rule-based systems. Thus, they are unavailable for case-based reasoning or for other kinds of knowledge sources such as genetic algorithms or neural networks where there are nowell-defined "if/then" rules.

Another difficulty encountered in verification is that since most knowledge-based systems are written in computer languages, it is difficult for an expert who is not a programmer to spot a problem since the expert frequently cannot read the rules derived by a knowledge engineer from his knowledge. Further, the verification process frequently depends on only a relatively small number of test cases. As a result, while the system may work for these particular test cases, it may not work for other cases which could reveal flaws in the system not detected by the test cases.

An important limitation of prior knowledge-based systems is that they generally are able to use only a single inference engine. Thus, for example, the system may use case-based reasoning, or rule-based reasoning, but not both. This limits the knowledge domain which a single system can handle, and also limits the flexibility of the system. This results in less context sensitivity. Also such system cannot make use of the unique advantages of the various types of inference engines.

Thus, it would be desirable to provide a knowledge-based system which can manage the acquisition of relatively large knowledge bases. Further, it would be desirable to provide such a system which includes an easy to implement knowledge-based verification scheme and which does not require formal proof procedures. It would be desirable to provide such a system which is easy to test and where it is easy to pinpoint where problems are in the system. Also, it would be desirable to provide a knowledge-based system in which the rules are written in English- like statements which can be recognized and analyzed by an expert. It would also be desirable to provide a system which can provide numerous test cases for use in the verification process.

In addition, it would also be desirable to provide an automated knowledge acquisition technique for knowledge-based systems which is fast and is not limited to classification problems but can handle large knowledge bases. It would additionally be desirable to provide a knowledge-based system which allows the combination of knowledge partially derived from data and partially derived from an expert. It would also be desirable to provide a knowledge-based system which allows the use of different inference engines in the same system.

### SUMMARY OF THE INVENTION

Pursuant to the present invention, there is provided a system and method for performing knowledge acquisition in a knowledge-based system which breaks the knowledge up into small interconnected modules. This permits the use of different kinds of inference engines. Also, the system and method provides for the acquisition of small bits of knowledge and for immediate testing of those knowledge sources before proceeding with constructing the entire system. This greatly simplifies the verification process.

In more detail, in accordance with one aspect of the present invention, a knowledge-based system for applying knowledge to the solution of a problem is provided which includes a knowledge-structuring unit for deconstructing the problem into individual modules and knowledge sources. The modules comprise input/output relationships associated with the application of one of the knowledge sources to one part of the problem. The system also includes a knowledge aggregation unit for repetitively acquiring test cases and individual components of the knowledge sources. The knowledge components are utilized by the modules to solve the test cases. A knowledge interconnection means is provided for interconnecting the modules in a sequence, that controls the flow of data between the modules as well as the sequence of execution of the modules. The test cases are used to verify the correctness of the solutions produced by individual modules before interconnection, as well as after their interconnection.

In accordance with a second aspect of the present invention, a method for applying knowledge to the solution of a problem is provided. The method includes the step of breaking the problem into a plurality of knowledge modules and knowledge sources where each module includes an input/output relationship and each module has associated knowledge sources. The knowledge sources each contain a plurality of knowledge components. Next, test cases and knowledge components are iteratively acquired and input into the modules to let the modules solve the test cases. The knowledge sources associated with each module are then verified by determining whether the module correctly solves the test case utilizing the knowledge source. Individual modules are then interconnected in a sequence which controls the flow of data between the modules as well as the sequence of the execution of the modules. The verification step is then performed again on the interconnected modules.

### BRIEF DESCRIPTION OF THE DRAWINGS

The various advantages of the present invention will become apparent to one skilled in the art by reading the following specification and by reference to the following drawings in which:
FIG. 1 is diagram of the main components of a knowledge acquisition system in accordance with the system of the present invention; and
FIG. 2 is a diagram of the process flow of a preferred embodiment of the present invention.

### DETAILED DESCRIPTION OF THE INVENTION

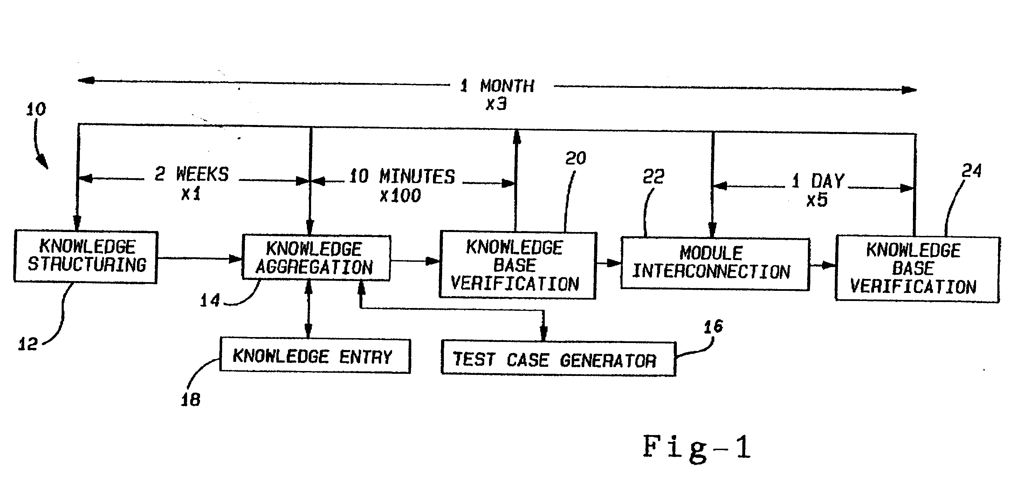

Referring now to FIG. 1, a preferred embodiment of a knowledge acquisition system 10 in accordance with the present invention is shown. The knowledge acquisition system 10 extracts symbolic knowledge from either human experts or historical data, or both. The first step in performing knowledge acquisition in accordance with the present invention is the task of knowledge structuring, as shown in the knowledge structuring unit 12 in FIG. 1.

Knowledge structuring breaks the problem down into individual modules and knowledge sources. A module is an input/output relationship associated with the application of a knowledge source to a par- ticulartask. A knowledge source is a collection ofsym- bolic representations. For example, knowledge sources may include: backward chaining rules, forward chaining rules, exemplar cases, class hierarchies, decision trees and neural networks.

During knowledge structuring in unit 12, after the modules and knowledge sources are identified, specific predicates are associated with input and output. As an example, if the knowledge-based system being developed is for performing air traffic control, individual modules may do specific tasks associated with air traffic control. For example, one module may calculate how long airplanes have been in the air and decide if an airplane must land right away. Another module may control when an airplane should land. Another module may determine how far apart airplanes should be. The outputs of some of these modules would become inputs to other modules. For example, if the module that determines how long an airplane has been in the air determines that a plane is about to run out of gas, that output would be fed to the module which decides which plane gets to land next. Thus, that module may override an existing priority and place this plane in a higher priority for landing.

The approach of the present invention greatly simplifies the task or constructing a knowledge-based system since modules can be tested individually. This permits flaws in the system to be detected and corrected on individual modules where they are easy to detect. In contrast, in prior systems, it is much more difficult to pinpoint a problem because testing is not performed until the entire system is constructed. In particular, where the number of rules exceeds 100 it becomes extremely difficult to find the source of unsatisfactory system performance. The present invention permits the construction and verification of larger-knowledge bases than are currently feasible e.g., several hundred rules, versus 100 rules with other automation techniques. Also, this allows knowledge bases to be constructed more quickly e.g., approximately 15 rules per day, versus 1 rule per day with standard practice. Ahother advantage is that the modular decomposition of the problem permits modules to use different inference engines. Thus, the expert's knowledge can be encoded in the best way for each type of knowledge. This also permits the combination of knowledge which is partially derived from an expert and partially from data.

The next step in the knowledge acquisition process of the present invention is knowledge aggregation 14. During knowledge aggregation, the acquisition of test cases and knowledge components in interleaved. Test cases are cases associated with each module used for testing the appropriate knowledge sources. In a preferred embodiment of the present invention, a test case generator 16 is employed to generate these test cases for each module. In more detail, the test case generator 16 works by taking a cartesian product and generating all the test cases in that product.

Knowledge components comprise the rules, ex- emplars, or whatever is appropriate for the type of knowledge source used with the particular module. The entry of the knowledge components occurs at the knowledge entry unit 18 shown in FIG. 1. During the process of knowledge aggregation, initially a test case is acquired from the test case generator 16. Next, knowledge components are acquired from the knowledge entry unit 18. The module is then allowed to solve the test case using the given knowledge components. Once the test case can be solved, another test case is acquired, followed by the acquisition of additional knowledge components, and this test case is solved. At regular intervals (such as every 5 to 10 test cases), all the test cases are run to insure that acquired knowledge components do not conflict.

Typically, test cases and knowledge components will have their origins in an expert in the field that the system is being built in. However, it could be possible for the knowledge to solve the problems, as well as test cases, to come from the environment. That is, the environment itself may generate both test cases and knowledge. For example, in portfolio construction, historical data can be used to derive test cases.

Once one module is partially completed, complimentary tests cases are acquired for other modules. A module is complete when it has all of the knowledge sources for the module to accomplish what it is supposed to accomplish and has been tested with an adequate number of test cases. Complimentary test cases are cases that have as their inputs, the outputs of a test case from a connected module.

Knowledge-base verification 20 consists of testing the module with the test cases acquired to verify individual knowledge sources or even individual knowledge components vithin a knowledge source. This preliminary knowledge-base verification 20 also can highlight problems in the knowledge structuring.

Module interconnection 22 is performed after some knowledge has been aggregated and some module connections tested. Module interconnection is generally performed by having a knowledge engineer code the control flow between modules. This code may be written in a conventional procedural language. The code for control flow is typically short and easy to understand compared with corresponding rules for a tool that does not support modular knowledge bases. This procedural code moves data between modules and sequences the execution of the modules. This code also interfaces to other software outside of the system 10 for access to data bases and to control equipment. The module interconnection code is created using a series of library functions that 1) create fact data bases, i.e. collection of instantiated predicates (ground terms); 2) create module instances from a module description; and 3) execute module instances using fact data bases as input and creating fact data bases as output.

Once several modules are completed, module connectivity is tested by stepping through a sequence of test cases to insure that 1) the modules interfaces are properly defined; and 2) that the test cases acquired for each module are appropriate given the modules it connects to. This step shown as knowledge-base verification 24, verifies that the entire system works, and depends on the procedural code that sequences the modules. It should be noted that knowledge entry occurs each time the system builder acquires knowledge for the knowledge components. It is desirable that software facilitate the data entry process in a format that is intuitive to the human expert (for expert driven knowledge) or that allows the easy manipulation of large amounts of data (for data driven knowledge). For example, the software used may support knowledge entry in its own format (which would be suitable for small amounts of knowledge) or for entry from external sources (e.g. spreadsheets) for large amounts of knowledge. FIG. 1 also shows the approximate time it takes to complete the knowledge acquisition process in accordance with the present invention; for a system of 100-300 rules that would ordinarily require one year, the entire process now takes about three months. These estimated times are provided as illustrative examples only and should not be construed as a limitation.

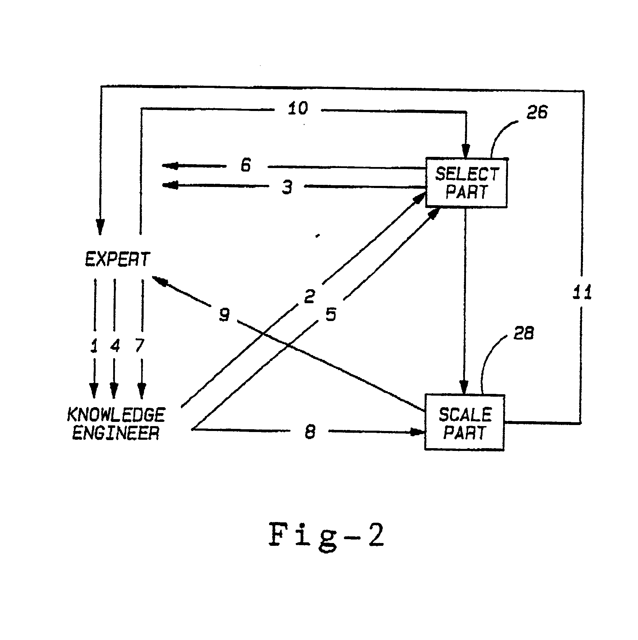

Referring now to FIG. 2, a preferred embodiment of the present invention is shown depicting an example of the design of a part. In this example, the design process is divided into two individual modules: a "se- leat part" module 26 and a "scale part" module 28. Thus, during the knowledge structuring 12, the task was divided into these two modules. In more detail, the select part module decides which stock (pre-existing) part should be scaled in order to create a new design. The "scale part" module 28 determines how to alter the chosen part's parameters in order to meet the new design's requirements. The output of the select part module 26 constitutes the input of the scale part module 28. This connection corresponds to the module interconnection 22 in FIG. 1. In this example, there is both an expert and a knowledge engineer. In some cases it will be appreciated that an expert may double as the knowledge engineer. Any or all of the steps described below may be, and usually are, iterated. All inputs, outputs and inferencing mechanisms (e.g. rules) should be in a form that the expert can read and understand. FIG. 2 illustrates eleven basic steps in this example. Each step is illustrated by an arrow having the number of the step superimposed on it.
1. Expert communicates a piece of knowledge to the knowledge engineer. For example, this may comprise a rule.
2. The knowledge engineer enters the knowledge into a software tool to begin construction of the select part module. In FIG. 1 this constitutes a portion of the knowledge aggregation 14 and knowledge entry units 18.
3. The select part unit 26 attempts to solve some portion of a problem (such as an expert derived test case) and gives feedback to the expert. This step in FIG. 1 corresponds to the knowledge-base verification unit 20.
4. Expert corrects the knowledge.
5. Knowledge engineer corrects the knowledge in the select part unit.
6. Expert verifies that the output is now correct.
7. Expert gives knowledge engineer some new knowledge for the scale part unit 28. This comprises the knowledge aggregation 14 and knowledge entry 18 units in FIG. 1.
8. Knowledge engineer enters knowledge (possibly with the same software tool) to begin constructing scale part module.
9. The scale part unit 28 attempts to solve some portion of a problem and the expert verifies that the knowledge is correct. This constitutes knowledge-base verification 20 shown in FIG. 1.
10. Expert enters a test case that tests both modules. This corresponds to post module interconnection knowledge-base verification 24.
11. Expert gets feedback.

From the foregoing, it can be seen that the present invention provides a knowledge acquisition system and technique for knowledge-based systems which can manage the acquisition of relatively large knowledge bases using an easy to implement knowledge-base verification scheme that does not require formal proof procedures. Further, by breaking up a problem into individual modules, it is easy to test and pin point problems in the system's operation. The system works relatively fast and is not limited to classification problems. It also allows the combination of knowledge partially derived from data and partially derived from an expert as well as permitting the combination of different inference engines in the same system. For example, forward chaining rules, backward chaining rules, neural networks, etc. may be used. Those skilled in the art can appreciate that other advantages can be obtained from the use of this invention and that modification can be made without departing from the true spirit of the invention after studying the specification, drawings and following claims.

## Claims

1. A knowledge-based system (10) for applying knowledge to the solution of a problem, characterized by:
- knowledge structuring means (12) for breaking said problem into modules (26, 28) and knowledge sources, said modules (26, 28) comprising input/output relationships associated with the application of one of said knowledge sources to one task involved in the solution of said problem;
- means for associating specific predicates with said input and output relationships;
- knowledge aggregation means (14) for repetitively acquiring test cases and knowledge components from said knowledge sources, said knowledge components being utilized by said modules (26, 28) to solve said test case; and
- module interconnection means (22) for interconnecting said modules (26, 28) in a sequence that controls the flow of information between modules (26, 28) and the sequence of excitation of the modules (26, 28), wherein said test cases are used to verify (20) the correctness of the solutions produced by individual modules (26, 28) before connection, as well as to verify (24) the correctness of solutions produced by the interconnected modules (26, 28) as a whole.

2. The system of claim 1, characterized in that said knowledge sources comprises backward chaining rules.

3. The system of claim 1 or 2, characterized in that said knowledge sources comprises exemplar cases.

4. The system of any of claims 1 - 3, characterized in that said knowledge sources comprises a decision tree.

5. The system of any of claims 1 - 4, characterized in that said knowledge sources comprises a neural network.

6. The system of any of claims 1 - 5, characterized in that said knowledge sources comprises forward chaining rules.

7. The system of any of claims 1 - 6, characterized in that said knowledge sources include knowledge derived from an expert and also knowledge derived from a source of data.

8. The system of any of claims 1 - 7, characterized by means for presenting said test cases to said modules (26, 28) at regular intervals wherein said modules (26, 28) solve said test case periodically to insure that acquired knowledge components do not conflict.

9. The system of any of claims 1 - 8, characterized in that said knowledge aggregation means (14) further comprises means for testing the connectivity of said modules (26, 28) by permitting said modules (26, 28) to perform a sequence of test cases.

10. The system of any of claims 1 - 9, characterized by means (16) for automatically generating said test cases.

11. A method for applying knowledge to solving a problem, said method comprising the steps of:
- breaking said problem into a plurality of modules (26, 28) and knowledge sources, each modules (26, 28) comprising an input and output relationship and each module (26, 28) having associated knowledge sources, said knowledge sources each containing a plurality of knowledge components;
- iteratively acquiring test cases and knowledge components, and inputting said test cases into said modules (26, 28) wherein said modules (26, 28) solve the test case;
- verifying (20, 24) said knowledge sources associated with each module (26, 28) by determining whether said modules (26, 28) can solve said test cases utilizing said knowledge source;
- interconnecting said modules (26, 28) in a sequence which controls the flow of information between modules (26, 28) and the sequence of the execution of the modules (26, 28); and
- repeating the step of verification (20, 24) for the interconnected modules (26, 28).

12. The method of claim 11, characterized by the step of automatically generating said test cases for use in said verifying step (20, 24).

13. The method of claim 11 or 12, characterized in that a knowledge source associated with at least one of said modules (26, 28) comprises backward chaining rules.

14. The method of any of claims 11 - 13, characterized in that a knowledge source associated with at least one of said modules (26, 28) comprises an exemplar case.

15. The method of any of claims 11 - 14, characterized in that a knowledge source associated with at least one of said modules (26, 28) comprises a decision tree.

16. The method of any of claims 11 - 15, characterized in that a knowledge source associated with at least one of said modules (26, 28) comprises a neural network.

17. The method of any of claims 11 - 16, characterized in that a knowledge source associated with at least one of said modules (26, 28) comprises forward chaining rules.

18. The method of any of claims 13 - 17, characterized in that said knowledge sources comprise knowledge derived both from a source of data and from an expert.
